# EUROPEAN PATENT SPECIFICATION

(11) **EP 1 699 602 B1**
(45) Date of publication and mention of the grant of the patent: **23.07.2008**
(21) Application number: 04805987.7
(22) Date of filing: 09.12.2004
(51) Int. Cl.: B25J 15/10

(54) **OBJECT HOLDING TOOL AND OBJECT SUPPORTING UNIT FOR OBJECTS OF DIFFERENT KIND**
OBJEKTHALTEWERKZEUG UND OBJEKTSTÜTZEINHEIT FÜR OBJEKTE VERSCHIEDENER ART
OUTIL PORTE-OBJET ET UNITE DE SUPPORT D'OBJET

(30) Priority: 12.12.2003 GB 0328887
(43) Date of publication of application: 13.09.2006
(73) Proprietor: GLAXO GROUP LIMITED, Greenford, Middlesex UB6 ONN (GB)
(72) Inventor: STANLEY, Alan Leslie GlaxoSmithKline, Harlow Essex CM19 5AW (GB); YOUNG, Kenneth William Warwick Manufact. Group, Coventry, Wawickshire CV4 7AL (GB); ZAPIAIN BAZDRESCH, Rodrigo Warwick Manufact. Group, Coventry, Wawickshire CV4 7AL (GB)
(74) Representative: Rice, Jason Neale
(86) International application number: PCT/GB2004/005167
(87) International publication number: WO 2005/056248

(56) References cited:
- EP-A- 0 788 871
- US-A- 5 775 755
- PATENT ABSTRACTS OF JAPAN vol. 2000, no. 02, 29 February 2000 (2000-02-29) -& JP 11 300675 A (MAC SCIENCE:KK), 2 November 1999 (1999-11-02)
- PATENT ABSTRACTS OF JAPAN vol. 2002, no. 06, 4 June 2002 (2002-06-04) -& JP 2002 036162 A (KURODA PRECISION IND LTD), 5 February 2002 (2002-02-05)
- PATENT ABSTRACTS OF JAPAN vol. 010, no. 381 (M-547), 19 December 1986 (1986-12-19) -& JP 61 172671 A (NEC KANSAI LTD), 4 August 1986 (1986-08-04)

## Description

### Field Of The Invention

The present invention relates to an object holding tool for holding objects, in particular open-topped receptacles, such as bottles and vials.

The object holding tool finds particular application in a weighing system for weighing objects which can be of different kind.

JP-11-300675 discloses an object holding tool having the features of the pre-characterising part of claim 1. Other object holding tools are disclosed in US-A-5775755 and JP-2002-36162.

### Background Of The Invention

The handling of objects, particularly where required to be weighed, is a time-consuming procedure, and it is an aim of the present invention to provide means for improved handling of objects, in particular open-topped receptacles, such as bottles and vials, which can be of different kind. It is a further aim of the present invention to provide an object holding tool which provides for the holding of open-topped receptacles, such as bottles and vials of two different kind, and thereby facilitates handling of such objects.

### Summary Of The Invention

Accordingly, the invention provides an object holding tool according to claim 1.

Preferred features of the invention are set forth in the appended subordinate claims and in the embodiments hereinafter described with reference to the accompanying FIGURES of drawings.

### Brief Description Of The Drawings

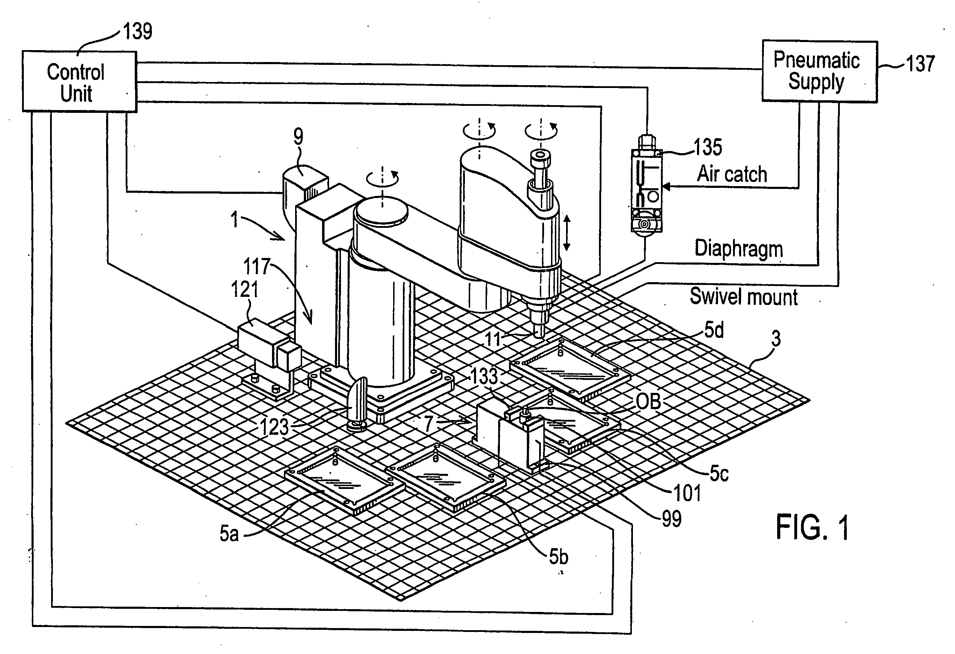

FIGURE 1 illustrates an automated object handling system comprising an object holding tool in accordance with a preferred embodiment of the present invention;
FIGURE 2(a) illustrates a perspective view of one object carrier of the handling system of FIGURE 1;
FIGURE 2(b) illustrates a plan view of the object carrier of FIGURE 2(a);
FIGURE 2(c) illustrates a plan view of one corner (region A in FIGURE 2(b)) of the object carrier of FIGURE 2(a);
FIGURE 2(d) illustrates a fragmentary vertical sectional view (along section I-I in FIGURE 2(b)) of the object carrier of FIGURE 2(a);
FIGURE 3(a) illustrates a plan view of one kind of object carrier, a so-called "glass plate";
FIGURE 3(b) illustrates a vertical sectional view (along section II-II) of the object carrier of FIGURE 3(a);
FIGURE 4(a) illustrates a plan view of another kind of object carrier, a so-called "tube plate", with lid removed;
FIGURE 4(b) illustrates a vertical sectional view (along section III-III) of the object carrier of FIGURE 4(a), with lid removed;
FIGURE 4(c) illustrates a vertical sectional view (along section III-III) of the object carrier of FIGURE 4(a), with lid fitted;
FIGURE 5(a) illustrates a perspective view of the tool assembly of the object handler of the handling system of FIGURE 1, illustrated in the carrier-sensing configuration;
FIGURE 5(b) illustrates a perspective view of the tool assembly of the object handler of the handling system of FIGURE 1, illustrated in the object-handling configuration;
FIGURE 6(a) illustrates a perspective view of the tool sensor of the tool assembly of the object handler of the handling system of FIGURE 1;
FIGURE 6(b) illustrates an exploded perspective view of the tool sensor of FIGURE 6(a);
FIGURE 6(c) illustrates a vertical sectional view (along section IV-IV) of the tool sensor of FIGURE 6(a);
FIGURES 7(a) to (c) illustrate the operation of the tool sensor of the tool assembly of the object handler of the handling system of FIGURE 1 in being advanced through first to third detection points;
FIGURE 8(a) illustrates a perspective view of the holding tool of the tool assembly of the object handler of the handling system of FIGURE 1;
FIGURE 8(b) illustrates an elevational view of the holding tool of FIGURE 8(a);
FIGURE 8(c) illustrates a plan view of the holding tool of FIGURE 8(a);
FIGURE 8(d) illustrates a vertical sectional view (along section V-V in FIGURE 8(c)) of the holding tool of FIGURE 8(a);
FIGURES 9(a) to (c) illustrate the operation of the holding tool of the tool assembly of the object handler of the handling system of FIGURE 1 in gripping an object of one kind;
FIGURES 10(a) to (c) illustrate the operation of the holding tool of the tool assembly of the object handler of the handling system of FIGURE 1 in gripping an object of another kind;
FIGURE 11(a) illustrates a perspective view of the weigh plate of the weighing unit of the weighing station of the handling system of FIGURE 1;
FIGURE 11(b) illustrates a plan view of the weigh plate of FIGURE 11(a);
FIGURE 11(c) illustrates a vertical sectional view (along section VI-VI in FIGURE 11(b)) of the weigh plate of FIGURE 11(a);
FIGURE 12(a) illustrates a perspective view of the reflector of the camera unit of the handling system of FIGURE 1;
FIGURE 12(b) illustrates an elevational view of the reflector of FIGURE 12(a); and
FIGURE 12(c) illustrates a vertical sectional view (along section VII-VII in FIGURE 12(b)) of the reflector of FIGURE 12(a).

### Detailed Description Of A Preferred Embodiment

The automated handling system comprises an object handler 1 for handling objects OB, in this embodiment open-topped receptacles, a support platform 3, at least one carrier holder 5, in this embodiment a plurality of identical carrier holders 5a-d for holding objects OB to be handled which are mounted to the support platform 3 at predetermined positions, and at least one analysis station 7 at which objects OB are to be analyzed which is mounted to the support platform 3 at a predetermined position.

In this embodiment the handling system is a laboratory bench-top handling system inasmuch as it is sized and configured to be placed and used on the work surface of a laboratory bench.

The object handler 1 comprises a robotic arm 9 and a tool assembly 11 which is attached to and operated by the robotic arm 9 in handling objects OB.

In this embodiment the robotic arm 9 is a SCARA (selective compliant assembly robot arm) robot which provides for movement in the X, Y and Z axes and rotation about the Z axis. In a preferred embodiment the robotic arm 9 is an EPSON ES351S robot as manufactured by SEIKO EPSON Corporation and supplied by System Devices Ltd. (Letchworth, Hertfordshire, UK). In alternative embodiments the robotic arm 9 could comprise a jointed-arm robot, such as a six-axis jointed-arm robot, or a Cartesian robot, which provide for movement in the X, Y and Z axes and rotation about the Z axis. A SCARA robot is preferred in having a smaller footprint, and a high degree of accuracy, speed and reliability.

In this embodiment the support platform 3 comprises a grid, here a breadboard, to which the carrier holders 5a-d and the at least one analysis station 7 can be mounted in many configurations as required. With this configuration, the handling system is very flexible, in allowing the operator to configure the arrangement of the carrier holders 5a-d and the at least one analysis station 7 as required.

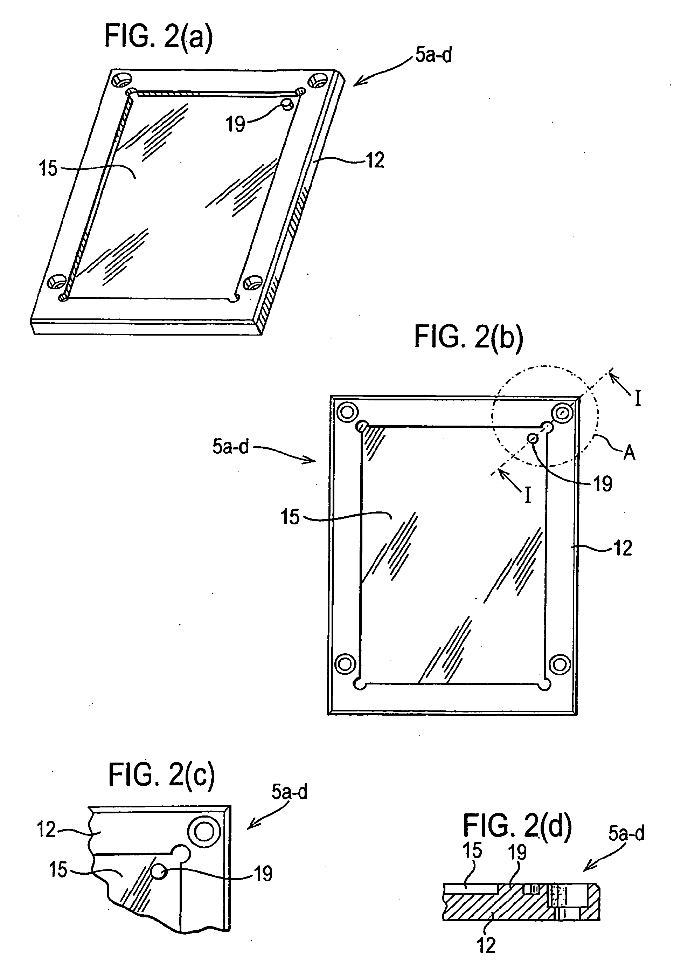

Referring particularly to FIGURES 2(a) to (d), in this embodiment the carrier holders 5a-d each comprise a body 12 which includes a recess 15, in this embodiment rectangular in shape, for receiving an object carrier 21, as will be described in more detail hereinbelow. In this embodiment the recess 15 is configured to provide that one kind of object carrier 21 can only be located in one orient on the carrier holder 5a-d so as to ensure that objects OB supported by that kind of object carrier 21 are always drawn from the same position. In this embodiment the recess 15 includes a referencing lug 19 at one corner thereof for receiving a corresponding referencing aperture 27 in the one kind of object carrier 21, thereby providing that that kind of object carrier 21 is correctly oriented only when the referencing lug 19 is located in the referencing aperture 27 of the object carrier 21. In one embodiment, as in this embodiment, the referencing lug 19 is provided by a dowel inserted into a dowel hole. As will become more apparent hereinbelow, fixing the respective positions of the objects OB in an object carrier 21 is important where the objects OB do not have any unique identifier, so as to allow the analysis performed in respect of any object OB to be recorded.

In this embodiment, as will be described in more detail hereinbelow, the handling system is configured to provide for identification of two existing, different kinds of object carriers 21, where one kind of object carrier 21 has two different states, that is, with lid on and lid off, and also the absence of an object carrier 21 on the carrier holders 5a-d. Although the handling system of this embodiment is described in relation to the use of object carriers 21 of existing designs, it will be understood that the handling system of the present invention extends to the use of object carriers 21 of other design.

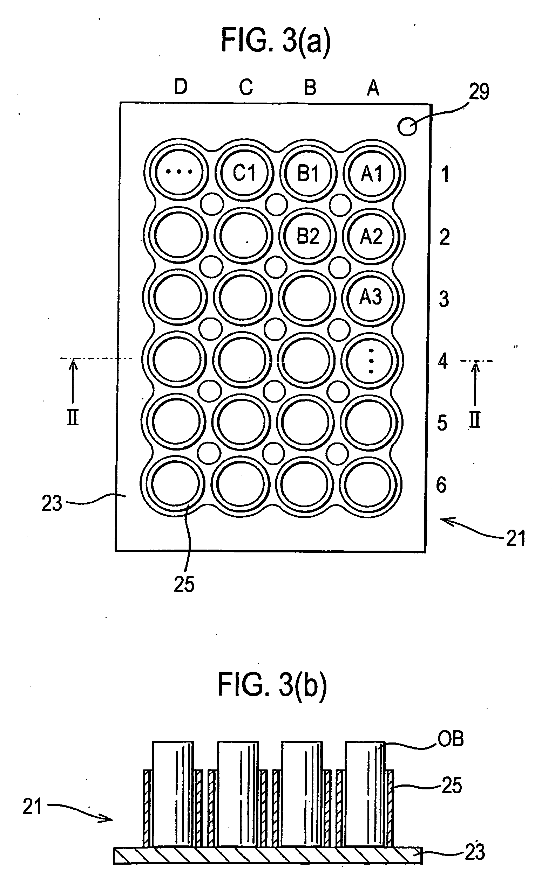

FIGURES 3(a) and (b) illustrate one kind of object carrier 21, referred to as a "glass plate" in the art, where the object carrier 21 comprises a body 23, in this embodiment a plate, which has a corresponding shape, in this embodiment rectangular, to the recesses 15 in the carrier holders 5a-d, and a plurality of object supports 25 arranged in the form of an array for supporting objects OB, in this embodiment glass vials. In this embodiment the array of object supports 25 comprises a predetermined number of rows and columns, here six rows and four columns A-E. The body 23 includes a referencing aperture 27 in one corner thereof for enabling referencing of the position of the object carrier 21 by requiring the referencing lug 19 on the carrier holder 5a-d to be located therewithin.

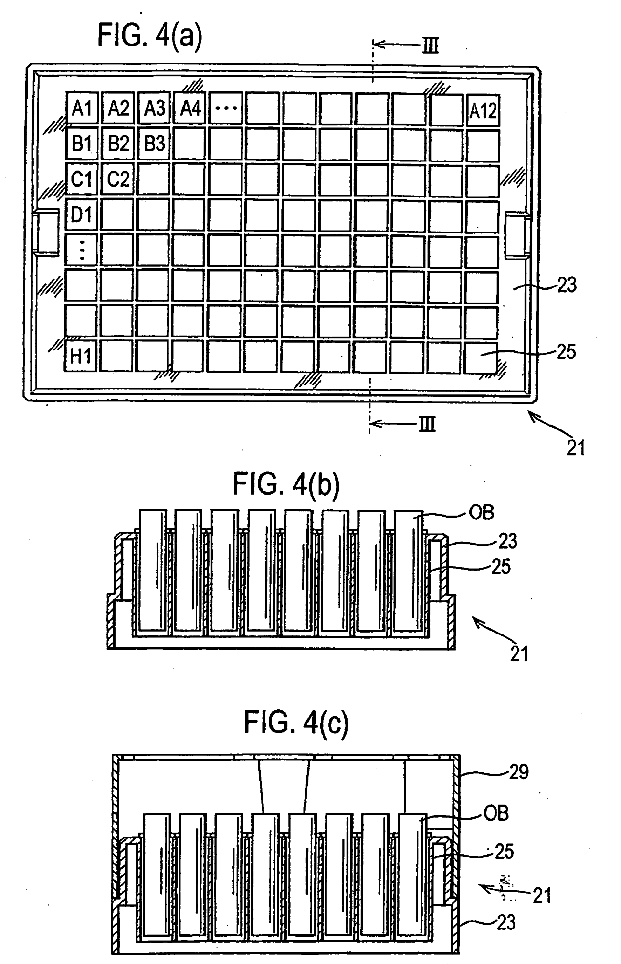

FIGURES 4(a) to (c) illustrate another kind of object carrier 21, referred to as a "tube plate" in the art, where the object carrier 21 comprises a body 23, in this embodiment a housing, which has a corresponding shape, in this embodiment rectangular, to the recesses 15 in the carrier holders 5a-d, and a plurality of object supports 25 arranged in the form of an array for supporting objects OB, in this embodiment plastic tubes, and a lid 29 for enclosing the supported objects OB. In this embodiment the array of object supports 25 comprises a predetermined number of rows and columns, here twelve rows and eight columns A-H.

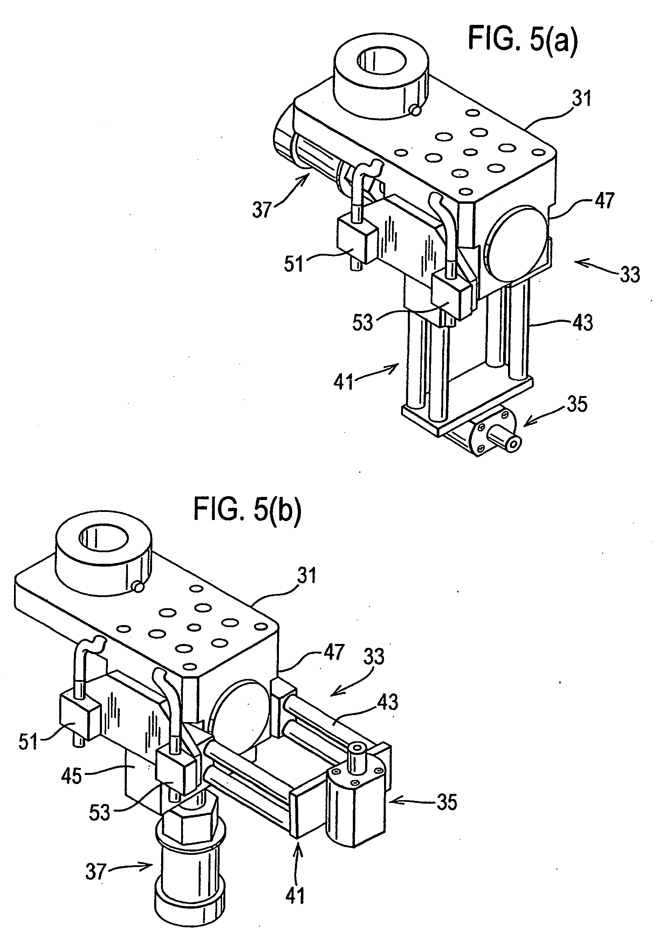

Referring to FIGURES 5(a) and (b), the tool assembly 11 comprises an attachment body 31 which is attached to the robotic arm 9, and a support unit 33 which is mounted to the attachment body 31 and operable between a first, carrier-sensing configuration (as illustrated in FIGURE 5(a)) and a second, object-holding configuration (as illustrated in FIGURE 5(b)), a sensor tool 35 which is mounted to the support member 33 to sense an object carrier 21 in the carrier-sensing configuration, and a holding tool 37 for holding an object OB in the object-holding configuration.

The support unit 33 comprises a support member 41 which comprises a first arm 43 to which the sensor tool 35 is mounted and a second arm 45 to which the holding tool 37 is mounted, and a swivel mount 47 to which the support member 41 is coupled and which is attached to the attachment body 31, with the swivel mount 47 being operable to swivel the support member 41 between a first, carrier-sensing position (as illustrated in FIGURE 5(a)) in which the sensor tool 35 is disposed in an operative position, in this embodiment laterally directed, and a second, object-holding position (as illustrated in FIGURE 5(b)) in which the holding tool 37 is disposed in an operative position, in this embodiment downwardly directed. In this embodiment the support unit 33 is a pneumatically-operated unit, here based on the SKE-18 swivelling unit as supplied by Schunk Intec Ltd. (Newport Pagnell, Bedfordshire, UK), with the pneumatic lines to the pneumatic valves including speed reducers to provide for smooth operation of the support unit 33.

The support unit 33 includes first and second detectors 51, 53, in this embodiment inductive sensors, for detecting the position of the support member 41 thereof so as to ensure that the tool change, as represented by the support member 41 being interchangeably in one of the carrier-sensing and object-holding positions, has been completed successfully.

In this embodiment the sensor tool 35 comprises an air nozzle unit, which, as will be described in more detail hereinbelow, is connected to a digital air catch sensor 135 as supplied by SMC Pneumatics (UK) Ltd. (Milton Keynes, Bedfordshire, UK).

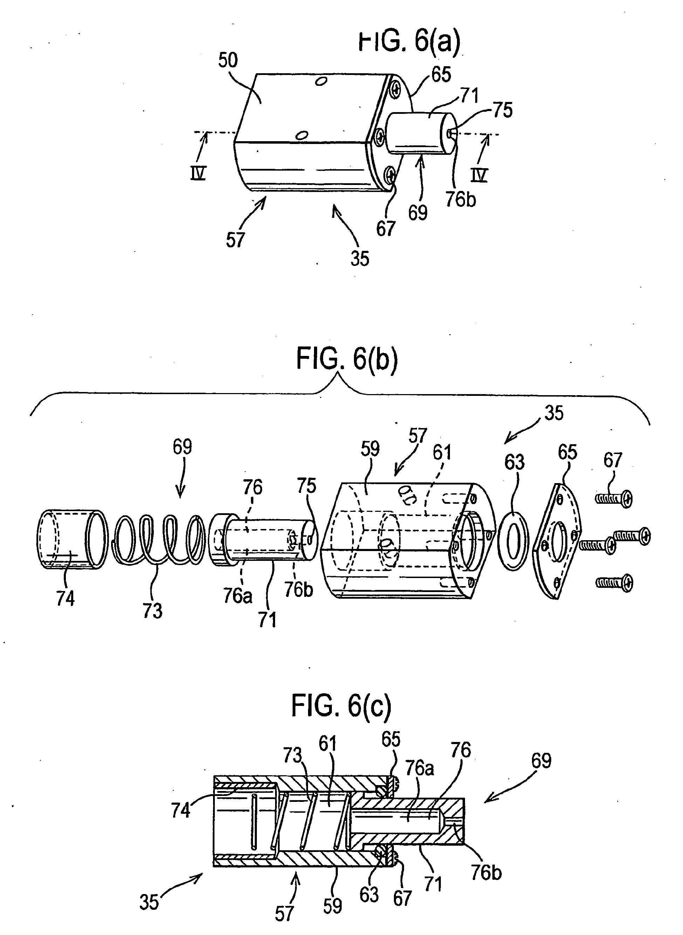

Referring to FIGURES 6(a) to (c), the sensor tool 35 comprises a body unit 57 which comprises a body 59 which is mounted to the first arm 43 of the support member 41 and includes a through bore 61, one, rearward end of which is pneumatically connected to the air catch sensor 135, a seal 63, in this embodiment a ring seal, which is disposed at the other, forward end of the bore 61, and a clamping plate 65 which is attached, in this embodiment by bolts 67, to the body 59 and acts to clamp the seal 63 in position.

The sensor tool 35 further comprises a nozzle unit 69 which comprises a nozzle 71 which is captively disposed within the bore 61 of the body 59 and extends through the forward end thereof outwardly of the body 59, with the nozzle 71 being a sealing fit with the seal 63, a biasing element 73, in this embodiment a resilient element, which acts to bias the nozzle 71 outwardly of the body 59, and a coupling element 74 which provides for a pneumatic coupling with the bore 61 of the body 59, in this embodiment by a screwthread engagement, and acts as an end stop for the biasing element 73. In this embodiment the coupling element 74 is a KQ2L pneumatic connector as supplied by SMC Pneumatics (UK) Ltd. (Milton Keynes, Bedfordshire, UK). The nozzle 71, in being outwardly biased, advantageously allows for tolerances in the positions of the object carriers 21 to be accommodated without causing any damage to the object carriers 21, as will become more apparent hereinbelow.

The nozzle 71 includes an air outlet 75 at the forward end thereof through which a sensing air flow is delivered, and an air channel 76 which extends longitudinally through the nozzle 71 such as to fluidly connect the bore 61 of the body 59 to the air outlet 75. In this embodiment the air channel 76 comprises an inner channel section 76a of a first, larger diameter, here 3 mm, and an outer channel section 76b, as a cylindrical section, of a second, smaller diameter, here 1 mm, at the forward end of the nozzle 71 which terminates in the air outlet 75.

With this configuration, the sensor tool 35 provides for the detection of a surface where disposed within a short range forwardly thereof, typically from about 10 µm to about 300 µm, through an increase in the pressure of the sensing air flow as delivered through the air channel 76 in the nozzle 71.

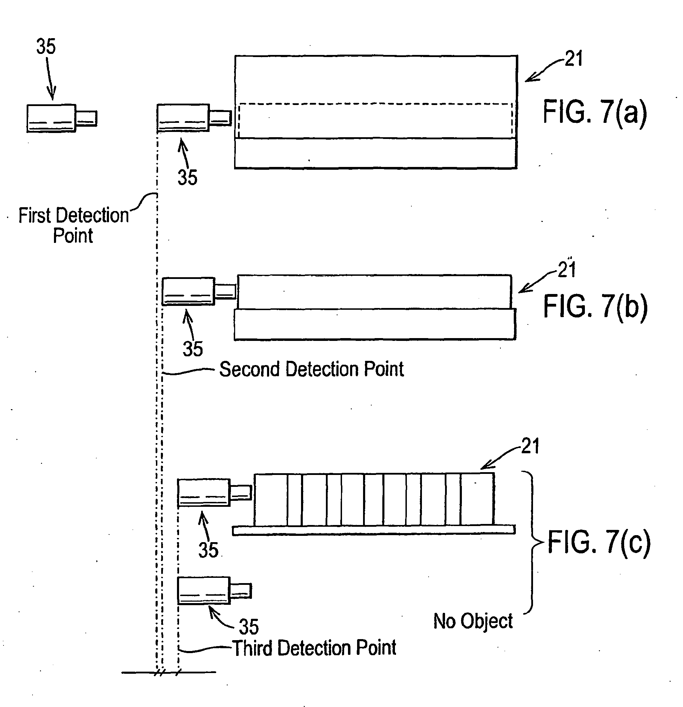

As will be described further hereinbelow, with the sensor tool 35 in the operative position, as illustrated in FIGURE 5(a), the handling system provides for the identification of the kind of object carrier 21 at a carrier holder 5a-d, and the state thereof, in this embodiment with lid on or lid off, or the absence of an object carrier 21 at a carrier holder 5a-d, by advancing the sensor tool 35 through a predetermined number of points. In this embodiment, as illustrated in FIGURE 7, the sensor tool 35 is advanced through three points along a common axis in enabling identification of the two above-described different kinds of object carrier 21, namely, a "glass plate" and a "tube plate", where the "tube plate" can have one of two states, that is, with lid on or lid off. The sensor tool 35 is first advanced to a first detection point, as illustrated in FIGURE 7(a), to sense for one kind of object carrier 21, that is, a "tube plate", in one state, that is, with lid on. Where a sense signal is obtained, the object carrier 21 is identified as being of the one kind and having the one state. Where no sense signal is obtained, the sensor tool 35 is advanced to a second detection point, as illustrated in FIGURE 7(b), to sense for the one kind of object carrier 21, that is, a "tube plate", in the other state, that is, with lid off. Where a sense signal is obtained, the object carrier 21 is identified as being of the one kind and having the other state. Where no sense signal is obtained, the sensor tool 35 is advanced to a third detection point, as illustrated in FIGURE 7(c), to sense for the other kind of object carrier 21, that is, a "glass plate". Where a sense signal is obtained, the object carrier 21 is identified as being of the other kind. Where no sense signal is obtained, the absence of any object carrier 21 is detected.

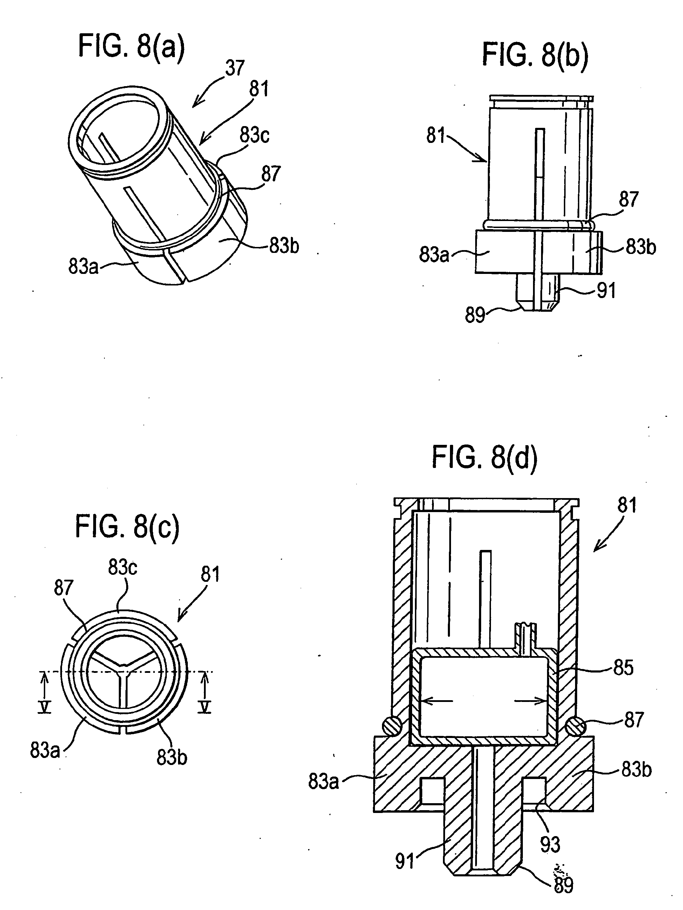

In this embodiment, as illustrated in FIGURES 8(a) to (d), the holding tool 37 comprises a collet gripper, here fabricated from an LG 4-20 collet gripper as manufactured by Sommer Automatic and supplied by Richard R. Leader Ltd. (London, UK).

The holding tool 37 comprises a main body 81 which defines a plurality of, in this embodiment three, gripping jaws 83a-c which are operable between a normal, contracted configuration and an expanded configuration to grip and release objects OB in transporting the same, a diaphragm 85, in this embodiment pneumatically driven, which is disposed within the main body 81 to expand the same and provide for the gripping and releasing of objects OB, and a biasing element 87, in this embodiment an annular, resilient element disposed about the gripping jaws 83a-c, for biasing the gripping jaws 83a-c to the contracted configuration, such as to provide that the gripping jaws 83a-c are returned to the contracted configuration on de-actuation of the diaphragm 85.

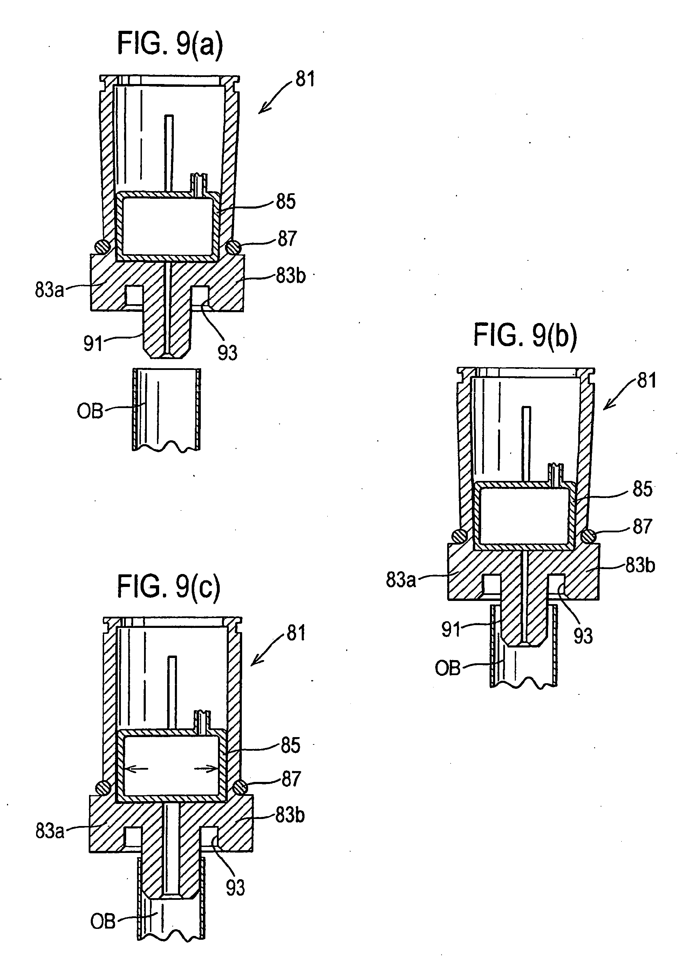

The gripping jaws 83a-c together define a downwardly-depending spigot 89 which defines a first, outwardly-facing gripping surface 91 of a first diameter which, on expansion of the gripping jaws 83a-c to the expanded configuration through actuation of the diaphragm 85, acts to grip an inner peripheral surface of an object OB of one kind, with the object OB being released on de-actuation of the diaphragm 85. In this embodiment the outwardly-facing gripping surface 91 has a diameter of 6 mm in the normal, contracted configuration and 7 mm in the expanded configuration and provides for the gripping of standard plastic tubes which have an average inner diameter of 6.6 mm. With these size relationships, the outwardly-facing gripping surface 91 has sufficient clearance in the contracted configuration to allow for insertion into an object OB of one kind and exerts a sufficient gripping force in the expanded configuration as to firmly grip the object OB. FIGURES 9(a) to (c) illustrate the gripping procedure in gripping an object OB of the one kind with the holding tool 37, where the holding tool 37, with the gripping jaws 83a-c in the contracted configuration, is first lowered onto the object OB (as illustrated in FIGURE 9(a)), such that the spigot 89 of the gripping jaws 83a-c extends into the object OB (as illustrated in FIGURE 9(b)), in this embodiment a distance of about 5 mm, and then the gripping jaws 83a-c are expanded to the expanded configuration through actuation of the diaphragm 85 such as to grip the object OB and allow for transport thereof (as illustrated in FIGURE 9(c)).

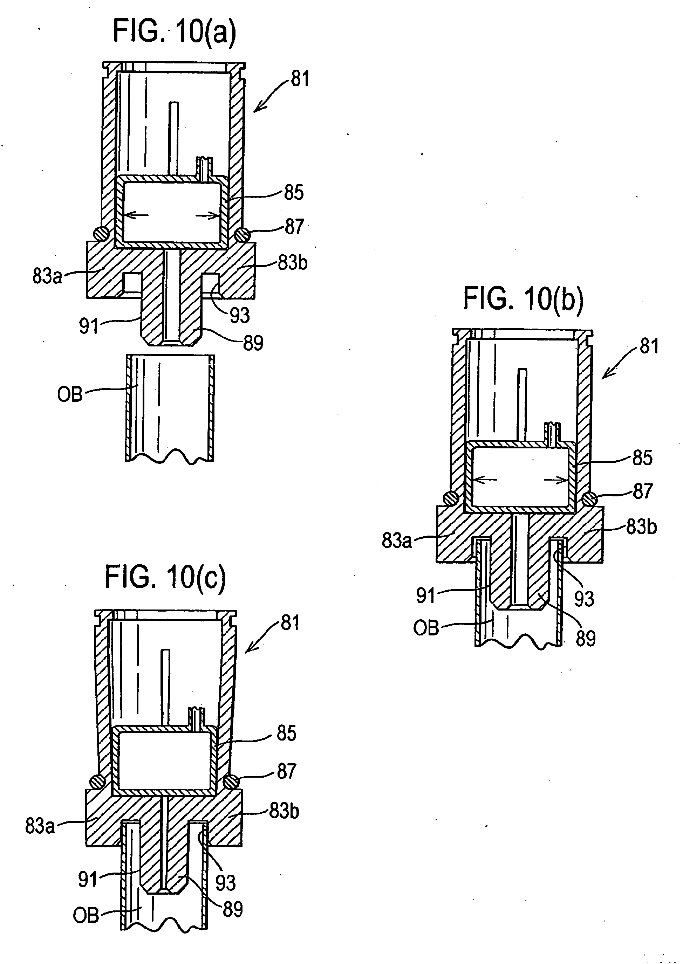

The gripping jaws 83a-c together further define a second, inwardly-facing gripping surface 93 of a second diameter, greater than the first diameter of the first, outwardly-facing gripping surface 91, which, with the gripping jaws 83a-c in the normal, contracted configuration, acts to grip an outer peripheral surface of an object OB of another kind, with the object OB being released by expansion of the gripping jaws 83a-c to the expanded configuration through actuation of the diaphragm 85. In this embodiment the inwardly-facing gripping surface 93 has a diameter of 9.9 mm in the normal, contracted configuration and 11.5 mm in the expanded configuration and provides for the gripping of standard glass vials which have an average inner diameter of 8.2 mm and an average outer diameter of 10.9 mm. With these size relationships, the outwardly-facing gripping surface 91 has sufficient clearance in the expanded configuration as to allow for insertion into an object OB of the other kind and the inwardly-facing gripping surface 93 exerts a sufficient gripping force in the contracted configuration as to firmly grip the object OB of the other kind. FIGURES 10(a) to (c) illustrate the gripping procedure in gripping an object OB of the other kind with the holding tool 37, where the holding tool 37, with the gripping jaws 83a-c in the expanded configuration through actuation of the diaphragm 85, is first lowered onto the object OB (as illustrated in FIGURE 10(a)), such that the spigot 89 of the gripping jaws 83a-c extends into the object OB (as illustrated in FIGURE 10(b)) and the upper, outer periphery of the object OB opposes the inwardly-facing gripping surface 93, and then the gripping jaws 83a-c are allowed to contract to the contracted configuration through de-actuation of the diaphragm 85 such as to grip the object OB and allow for transport thereof (as illustrated in FIGURE 10(c)).

In this regard, it will be noted that the objects OB are light and thus small gripping forces are required; plastic tubes having a weight of about 0.5 g and glass vials having a weight of about 3 g.

In this embodiment the at least one analysis station 7 is a weighing unit for weighing objects OB. The at least one analysis station 7 comprises a weigh cell 99, in this embodiment an electromagnetic force restoration cell, here an MTC 10/30-ZER-01 weigh cell as supplied by Wipotec GmbH (Kaiserslauten, Germany) having a measuring range of 10 g with a resolution of 0.1 mg and a standard deviation of 0.2 mg, for weighing objects OB, and a weigh plate 101 which is located on the weigh cell 99 and configured stably to support objects OB to be weighed.

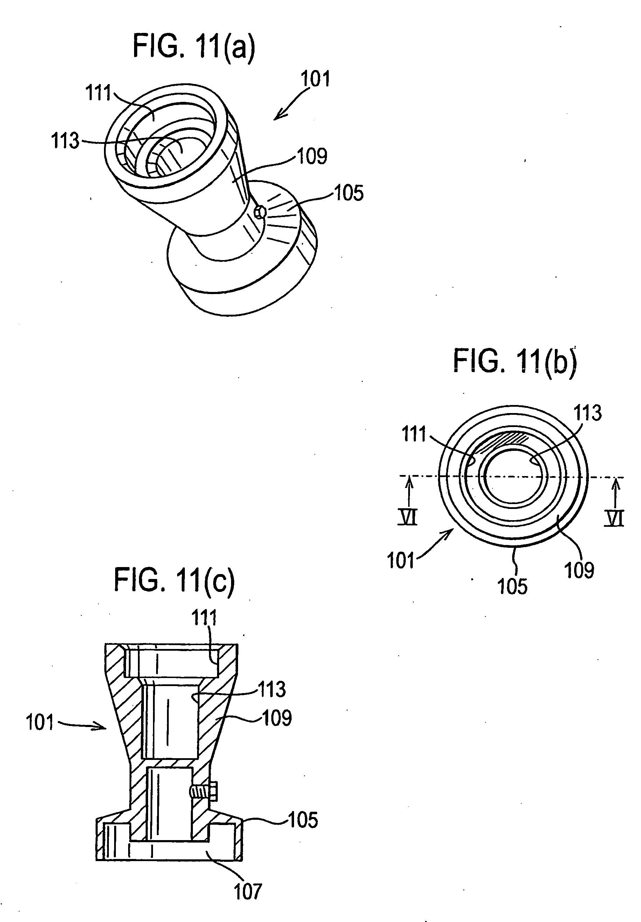

Referring to FIGURES 11(a) to (c), the weigh plate 101 comprises a base 105 which includes a recess 107 in a lower surface thereof for receiving the weigh cell 99, and a support body 109 which includes first and second concentric recesses 111, 113 therein for receiving respective ones of the objects OB of different kind, in this embodiment glass vials and plastic tubes. The depths of the first and second recesses 111, 113 are such that the upper rims of the two different kinds of object OB described above are at the same height when accommodated in the respective recesses 111, 113. This configuration facilitates handling since the holding tool 37 need only be presented in one plane. In this embodiment the second recess 113, which has a smaller diameter and greater depth than the first recess 111, is configured to receive elongate objects OB, and the diameter is configured to be a relatively close fit with the respective objects OB such as to support those objects OB in a vertical orient. In this embodiment the first recess 111 has a diameter of 13 mm and a depth of 5 mm, and the second recess 113 has a diameter of 7.75 mm and a depth of 17 mm.

The handling system further comprises a camera unit 117 for reading labelling, where provided, on the objects OB, thereby allowing the acquired data for each such object OB to be assigned without reference to the position of the object OB on the respective object carrier 21.

The camera unit 117 comprises a camera 121, in this embodiment a DVT Smart Reader as supplied by DVT (Milton Keynes, Bedfordshire, UK) which includes a CCD sensor and lens arrangement for capturing a digitised image of labelling, where provided, on an object OB, and a processor for interpreting the data, which includes an object identifier, contained within the labelling, and a reflector 123 for relaying the image of the labelling to the camera 121, which in this embodiment is provided to the bottom of an object OB, as will be described in more detail hereinbelow.

In this embodiment the labelling comprises a data matrix code, here an ECC200 code having a 12 x 12 size.

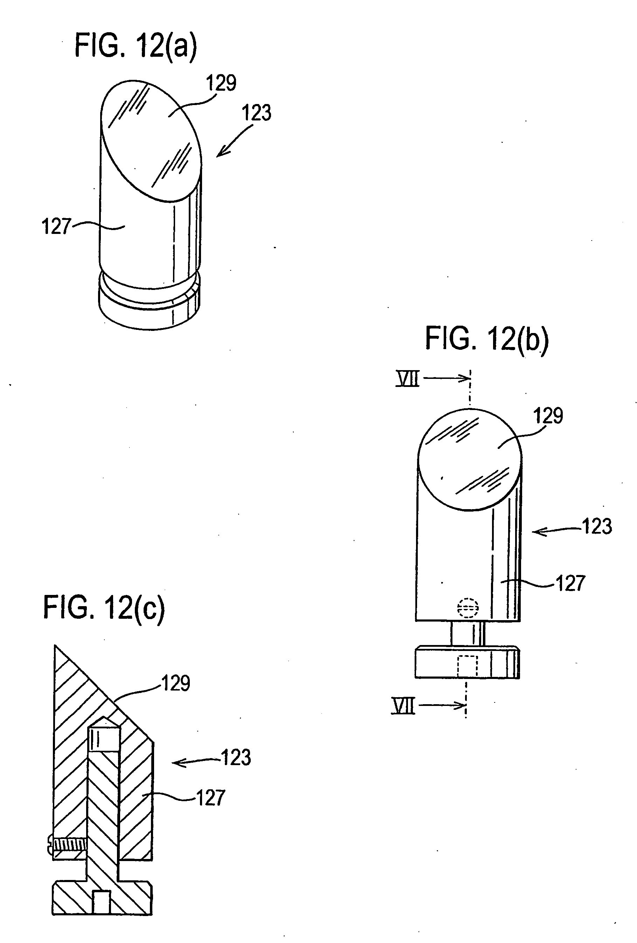

Referring to FIGURES 12(a) to (c), in this embodiment the reflector 123 comprises a support body 127 which is mounted to the support platform 3, and, as with the at least one carrier holder 5a-d and the at least one analysing station 7, can be located in any available position, and a mirror tile 129 which is inclined from the vertical orient, here by 45 degrees such as to present the image of labelling on an object OB, which is on the bottom of the object OB and thus in a horizontal plane, in a vertical plane on an axis parallel to the plane of the support platform 3. With this configuration, the objects OB, when handled, can be maintained proximate the surface of the support platform 3 and need not be raised the distance above the support platform 3 which would otherwise be required to allow the camera 121 directly to image labelling on the bottom of objects OB.

The handling system further comprises a detector unit 133 for detecting the presence of an object OB on the weigh plate 101 of the at least one analysis station 7, so as to enable control of the handling system to prevent another object OB from being handled by the object handler 1 whilst an object OB is present on the weigh plate 101.

In this embodiment the detector unit 133 comprises a photoelectric sensor, here a polarized retro-reflective photoelectric sensor as supplied by Rockwell Automation Ltd. (Milton Keynes, Bedfordshire, UK), for detecting the presence of an object OB on the weigh plate 101 of the at least one analysis station 7. The photoelectric sensor comprises a light emitter and a light receiver, both provided with polarizing filters, and a reflector for depolarizing and reflecting the transmitted light. In the absence of an object OB on the weigh plate 101, the transmitted polarized light is reflected by the reflector as de-polarised light and detected by the light receiver, whereupon the detector unit 133 generates an object absent signal. Where an object OB is present on the weigh plate 101, the transmitted light is reflected by the object OB as polarized light and not detected by the light receiver, whereupon the detector unit 133 generates an object present signal.

As mentioned hereinabove, by providing for detection of the presence of an object OB on the weigh plate 101 of the at least one analysis station 7, the handling system provides for fail-safe modes which prevent the possibility of more than one object OB from being handled simultaneously. In this embodiment the fail-safe modes comprise: (i) Preventing an object OB from being retrieved from an object carrier 21 where an object OB is detected on the weigh plate 101; (ii) If an object OB is not detected on the weigh plate 101 after operation of the object handler 1 to place an object OB thereon, the object handler 1 is operated to return the object OB to the original, retrieved position in the object carrier 21 and retrieve the object OB from the next programmed position in the object carrier 21; and (iii) If an object OB is detected on the weigh plate 101 after operation of the object handler 1 to return the object OB to the object carrier 21, the object handler 1 is operated to repeat this operation a predetermined number of times, here three, and, if the object OB is then still detected on the weigh plate 101, the operator is provided with a warning message and the handling system locked down to allow for intervention by the operator.

The handling system further comprises an air catch sensor 135 which is pneumatically connected to the sensor tool 35 of the tool assembly 11, in this embodiment through the coupling element 74 thereof, and a pneumatic supply 137, as will be described in more detail hereinbelow, and operates to detect the presence of a surface proximate the nozzle 71 of the sensor tool 35. As described hereinabove, the air catch sensor 135 is operative to detect the proximity of an object carrier 21 to the nozzle 71 of the sensor tool 35 from an increase in the pressure of the air flow as delivered through the nozzle 71 of the sensor tool 35. This increased pressure results from the back-pressure generated as a result of the proximity of the object carrier 21, and is detected by referencing the pressure of the air flow as delivered through the nozzle 71 of the sensor tool 35 to a reference flow which is exhausted to atmosphere. As mentioned hereinabove, the air catch sensor 135 can be tuned to detect a surface within a close proximate range to the nozzle 71 of the sensor tool 35, typically in the range of from about 10 µm to about 300 µm.

The handling system further comprises a pneumatic supply 137 which is pneumatically connected to the swivel mount 47 of the support member 33 of the tool assembly 11 to effect movement of the support member 33 between the carrier-sensing and object-holding configurations, the diaphragm 85 of the holding tool 37 of the tool assembly 11 to actuate the diaphragm 85, and the air catch sensor 135 to provide a detection pressure flow.

The handling system further comprises a control unit 139, in this embodiment a PC-controlled unit, for controlling operation of the handling system. The control unit 139 is operably connected to the object handler 1 to control movement of the robotic arm 9, the at least one analysis station 7 to receive the analysis signal, in this embodiment a weigh signal, for each object OB, the sensors 51, 53 of the tool assembly 11 to detect the configuration of the support member 33 thereof, the camera unit 121 to receive data as read thereby from the labelling on objects OB, the detector unit 133 to receive a detection signal to detect the presence of an object OB at the at least one analysis station 7, the air catch sensor 135 to receive a sense signal when the nozzle 71 of the sensor tool 35 is proximate a surface of an object carrier 21, and the pneumatic supply 137 to control operation of the same in selectively supplying pneumatic pressure to each of the swivel mount 47 of the support member 33 of the tool assembly 11, the diaphragm 85 of the holding tool 37 of the tool assembly 11, and the air catch sensor 135.

Operation of the handling system will now be described hereinbelow.

One or more of the carrier holders 5a-d are first loaded with object carriers 21. In this embodiment any kind of object carrier 21 can be loaded on any of the carrier holders 5a-d, and one or more of the carrier holders 5a-d can remain empty.

Following loading of the carrier holders 5a-d, the tool assembly 11 is configured such that the sensor tool 35 is in the operative position, and, for each of the carrier holders 5a-d in turn, a sensing operation is performed to identify the kind of object carrier 21, where present, on the respective carrier holders 5a-d.

The handling system provides for the identification of the kind of object carrier 21, and the state thereof, in this embodiment with lid on or lid off, or the absence of an object carrier 21, by advancing the sensor tool 35 through a predetermined number of detection points. In this embodiment, as illustrated in FIGURE 7, the sensor tool 35 is advanced through three points along a common axis in enabling identification of the two above-described different kinds of object carrier 21, namely, a "glass plate" and a "tube plate", where the "tube plate" can have one of two states, that is, with lid on or lid off. The sensor tool 35 is first advanced to a first detection point, as illustrated in FIGURE 7(a), to sense for one kind of object carrier 21, that is, a "tube plate", in one state, that is, with lid on. Where a sense signal is obtained, the object carrier 21 is identified as being of the one kind and having the lid on, and the operator is prompted to remove the lid. Where no sense signal is obtained, the sensor tool 35 is advanced to a second detection point, as illustrated in FIGURE 7(b), to sense for the one kind of object carrier 21, that is, a "tube plate", in the other state, that is, with lid off. Where a sense signal is obtained, the object carrier 21 is identified as being of the one kind and having the lid off. Where no sense signal is obtained, the sensor tool 35 is advanced to a third detection point, as illustrated in FIGURE 7(c), to sense for the other kind of object carrier 21, that is, a "glass plate". Where a sense signal is obtained, the object carrier 21 is identified as being of the other kind. Where no sense signal is obtained, the absence of any object carrier 21 is detected.

On identification of the kind of object carrier 21 or the absence of an object carrier 21 on each of the carrier holders 5a-d, the control unit 139 provides for the handling of objects OB from the carrier holders 5a-d in accordance with a predetermined handling routine for the kind of object carrier 21. In this way, the handling system allows for any kind of known object carrier 21 to be located on any of the carrier holders 5a-d, thereby providing a flexible handling system, in not being constrained to requiring particular kinds of object carriers 21 to be loaded on specific ones of the carrier holders 5a-d.

The tool assembly 11 is then configured such that the holding tool 37 is in the operative position, and, by operation of the object handler 1, an analysing operation is performed, whereby ones or all of the objects OB on each of the identified object carriers 21 are in turn transferred, one at a time, to the at least one analysis station 7 for analysis, in this embodiment weighing, and returned to the original position in the respective object carrier 21. For each of the identified object carriers 21, which support one of the respective kinds of objects OB, the holding tool 37 is operated in the respective one of the two operating modes in handling objects OB therefrom. In this embodiment the object handler 1 is operated in a preprogrammed routine such that the objects OB of each respective kind follow a predetermined path.

In this embodiment the objects OB on one kind of object carrier 21 are not labelled and the objects OB on the other kind of object carrier 21 are labelled. For those objects OB which are not labelled, the acquired data is recorded in respective files according to the positions of the objects OB on the respective object carriers 21. For those objects OB which are labelled, the labelling on each of those objects OB is read by the camera unit 117 in each respective handling operation, in this embodiment by locating each object over the reflector 123 of the camera unit 117, such as to allow for the acquisition of the data contained in the labelling by the camera 121.

On completion of the analysing operation, the object carriers 21 are unloaded from the carrier holders 5a-d, and the analysis for each of the objects OB on each of the object carriers 21 is available for subsequent processing.

This procedure can then be repeated for a further set of object carriers 21.

As will be appreciated, the control unit 139 of the handling system is preprogrammed with the predetermined positions (robot co-ordinates) of each of the carrier holders 5a-d, the analysis station 7 and the camera unit 117 on the support platform 3 whereby the control unit 139, in use, operates to cause the robotic arm 9 to move the tool assembly 11 along a predetermined path above the support platform 3 which takes in these predetermined positions in a predetermined sequence and to carry out the appropriate sub-routine at each carrier holder 5a-d, the analysis station 7 and, optionally, the camera unit 117 as hereinabove described.

In an alternative embodiment, the control unit 139 may operate to move the robotic arm to just one, or selected ones, of the carrier holders 5a-d and then the analysis station 7, optionally also taking in the camera unit 117.

Finally, it will be understood that the present invention has been described in its preferred embodiment and can be modified in many different ways without departing from the scope of the invention as defined by the appended claims.

Also, as regards the provision of reference signs in the appended claims, it is to be understood that reference signs are provided only for illustrative purposes and are not intended to confer any limitation to the claimed invention.

## Claims

1. An object holding tool for holding objects (OB), comprising a gripping unit which is operable between a contracted configuration and an expanded configuration to grip and release objects (OB) in transporting the same, wherein the gripping unit defines a first, outwardly-facing gripping surface (91) which, with the gripping unit in an expanded configuration, acts to grip an inner peripheral surface of an object (OB) of one kind, and a second, inwardly-facing gripping surface (93) which, with the gripping unit in a contracted configuration, acts to grip an outer peripheral surface of an object (OB) of another kind;
**characterised in that:-**
the gripping unit comprises a spigot (89) projecting therefrom, the spigot having proximal and distal ends and a outwardly-facing side between the proximal and distal ends which defines the first, outwardly-facing gripping surface (91); and **in that**
the second, inwardly-facing gripping surface (93) is spaced outwardly from, and in facing relation with, the outwardly-facing side of the spigot.

2. The holding tool of claim 1, further comprising an actuation mechanism for actuating the gripping unit between the contracted and expanded configurations.

3. The holding tool of claim 2, wherein the actuation mechanism comprises a biasing element (87) for biasing the gripping unit to one of a contracted or expanded configuration and a drive unit which is operable to overcome the bias of the biasing element (87) to drive the gripping unit to the other of the contracted or expanded configuration.

4. The holding tool of claim 3, wherein the biasing element (87) biases the gripping unit to a contracted configuration and the drive unit is operable to drive the gripping unit to an expanded configuration.

5. The holding tool of claim 3 or 4, wherein the biasing element (87) comprises a resilient element.

6. The holding tool of any of claims 3 to 5, wherein the drive unit comprises a diaphragm (85).

7. The holding tool of any of claims 1 to 6, wherein the gripping unit comprises a plurality of gripping jaws (83a-c).

8. The holding tool of any one of claims 1 to 7, wherein the first surface is of a first diameter and the second surface is of a second diameter greater than the first diameter.

9. The holding tool of claim 7 or claim 8 when appended to claim 7, wherein each gripping jaw comprises a segment of the spigot and the second gripping surface.

## Patentansprüche

1. Objekthaltegerät zum Halten von Objekten (OB), mit einer Greifeinheit, die zwischen einer zusammengezogenen Ausgestaltung und einer ausgedehnten Ausgestaltung betriebsfähig ist, um Objekte (OB) beim Transportieren derselben zu ergreifen und freizugeben, wobei die Greifeinheit eine erste, nach außen gewandte Greifoberfläche (91) definiert, die, mit der Greifeinheit in einer ausgedehnten Ausgestaltung, wirkt, um eine innere Umfangsoberfläche eines Objekts (OB) von einer Art zu ergreifen, und eine zweite, nach innen gewandte Greifoberfläche (93), die, mit der Greifeinheit in einer zusammengezogenen Ausgestaltung, wirkt, um eine äußere Umfangsoberfläche eines Objekts (OB) einer anderen Art zu ergreifen;
**dadurch gekennzeichnet, dass**
die Greifeinheit einen Zapfen (89) umfasst, der davon vorsteht, wobei der Zapfen ein proximales und ein distales Ende und eine nach außen gewandte Seite zwischen dem proximalen und dem distalen Ende aufweist, welche die erste, nach außen gewandte Greifoberfläche (91) definiert; und **dadurch**, dass
die zweite, nach innen gewandte Greifoberfläche (93) nach außen von, und in zugewandter Beziehung mit, der nach außen gewandten Seite des Zapfens beabstandet ist.

2. Haltegerät nach Anspruch 1, ferner mit einem Betätigungsmechanismus zum Betätigen der Greifeinheit zwischen der zusammengezogenen und der ausgedehnten Ausgestaltung.

3. Haltegerät nach Anspruch 2, bei dem der Betätigungsmechanismus ein Vorspannelement (87) umfasst, zum Vorspannen der Greifeinheit in eine von einer zusammengezogenen oder ausgedehnten Ausgestaltung, und eine Antriebseinheit, die betriebsfähig ist, um die Vorspannung des Vorspannelements (87) zu überwinden, um die Greifeinheit zu der anderen der zusammengezogenen oder ausgedehnten Ausgestaltung anzutreiben.

4. Haltegerät nach Anspruch 3, bei dem das Vorspannelement (87) die Greifeinheit in eine zusammengezogene Ausgestaltung vorspannt, und wobei die Antriebseinheit betriebsfähig ist, um die Greifeinheit in eine ausgedehnte Ausgestaltung anzutreiben.

5. Haltegerät nach Anspruch 3 oder 4, bei dem das Vorspannelement (87) ein elastisches Element umfasst.

6. Haltegerät nach einem der Ansprüche 3 bis 5, bei dem die Antriebseinheit eine Membran (85) umfasst.

7. Haltegerät nach einem der Ansprüche 1 bis 6, bei dem die Greifeinheit eine Vielzahl von Greifbacken (83a-c) umfasst.

8. Haltegerät nach einem der Ansprüche 1 bis 7, bei dem die erste Oberfläche einen ersten Durchmesser aufweist und die zweite Oberfläche einen zweiten Durchmesser aufweist, der größer als der erste Durchmesser ist.

9. Haltegerät nach Anspruch 7 oder Anspruch 8, bei Abhängigkeit von Anspruch 7, bei dem jede Greifbacke ein Segment des Zapfens und die zweite Greifoberfläche umfasst.

## Revendications

1. Outil de retenue d'un objet pour retenir des objets (OB), comprenant une unité de préhension qui peut être actionnée entre une configuration contractée et une configuration étendue pour agripper et relâcher des objets (OB) lors du transport de ceux-ci, dans lequel l'unité de préhension définit une première surface de préhension tournée vers l'extérieur (91) qui, avec l'unité de préhension dans une configuration étendue, agit pour agripper une surface périphérique interne d'un objet (OB) d'un type, et une seconde surface de préhension tournée vers l'intérieur (93) qui, avec l'unité de préhension dans une configuration contractée, agit pour agripper une surface périphérique externe d'un objet (OB) d'un autre type ;
**caractérisé en ce que :**
l'unité de préhension comprend une queue de fixation (89) faisant saillie à partir de celle-ci, la queue de fixation ayant des extrémités proximale et distale et un côté tourné vers l'extérieur entre les extrémités proximale et distale qui définit la première surface de préhension tournée vers l'extérieur (91) ; et **en ce que**
la seconde surface de préhension tournée vers l'intérieur (93) est espacée vers l'extérieur, et face au côté tourné vers l'extérieur de la queue de fixation.

2. Outil de retenue selon la revendication 1, comprenant en outre un mécanisme d'actionnement pour actionner l'unité de préhension entre les configurations contractée et étendue.

3. Outil de retenue selon la revendication 2, dans lequel le mécanisme d'actionnement comprend un élément de sollicitation (87) pour solliciter l'unité de préhension vers une configuration contractée ou étendue et une unité d'entraînement qui peut être actionnée pour surmonter la sollicitation de l'élément de sollicitation (87) pour entraîner l'unité de préhension vers l'autre configuration parmi la configuration contractée ou étendue.

4. Outil de retenue selon la revendication 3, dans lequel l'élément de sollicitation (87) sollicite l'unité de préhension vers une configuration contractée et l'unité d'entraînement peut être actionnée pour entraîner l'unité de préhension vers une configuration étendue.

5. Outil de retenue selon la revendication 3 ou 4, dans lequel l'élément de sollicitation (87) comprend un élément résilient.

6. Outil de retenue selon l'une quelconque des revendications 3 à 5, dans lequel l'unité d'entraînement comprend un diaphragme (85).

7. Outil de retenue selon l'une quelconque des revendications 1 à 6, dans lequel l'unité de préhension comprend une pluralité de mâchoires de préhension (83a-c).

8. Outil de retenue selon l'une quelconque des revendications 1 à 7, dans lequel la première surface est d'un premier diamètre et la seconde surface est d'un second diamètre supérieur au premier diamètre.

9. Outil de retenue selon la revendication 7 ou la revendication 8 lorsqu'elle dépend de la revendication 7, dans lequel chaque mâchoire de préhension comprend un segment de la queue de fixation et la seconde surface de préhension.
